(19) **Europäisches Patentamt** / **European Patent Office** / **Office européen des brevets**

(11) **EP 2 986 930 B1**

(12) **EUROPEAN PATENT SPECIFICATION**

(45) Date of publication and mention of the grant of the patent:
**29.06.2022 Bulletin 2022/26**

(21) Application number: **14783438.6**

(22) Date of filing: **11.04.2014**

(51) International Patent Classification (IPC):
**G01B 11/08** *(2006.01)*     **G06T 7/00** *(2017.01)*
**G06T 7/60** *(2017.01)*     **G01B 5/00** *(2006.01)*
**G06K 9/00** *(2022.01)*

(52) Cooperative Patent Classification (CPC):
**G01B 11/285; G01B 5/0035**

(86) International application number:
**PCT/FI2014/000005**

(87) International publication number:
**WO 2014/167174 (16.10.2014 Gazette 2014/42)**

(54) **A METHOD FOR MEASURING BASAL AREA OF TRUNKS IN A FOREST BASED ON DECODING OF PHOTOS TAKEN OF THE FOREST COVER**

VERFAHREN ZUR MESSUNG DER GRUNDFLÄCHE VON BAUMSTÄMMEN IN EINEM WALD AUF BASIS DER DECODIERUNG VON FOTOS DES WALDBESTANDES

PROCÉDÉ PERMETTANT DE MESURER LA SURFACE TERRIÈRE DE TRONCS DANS UNE FORÊT SUR LA BASE DU DÉCODAGE DE PHOTOS PRISES DU COUVERT FORESTIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.04.2013 FI 20130106**

(43) Date of publication of application:
**24.02.2016 Bulletin 2016/08**

(73) Proprietor: **Trestima Oy**
**33710 Tampere (FI)**

(72) Inventors:
• **KIVIMÄKI, Simo**
**FI-33710 Tampere (FI)**
• **ROUVINEN, Timo**
**FI-36110 Ruutana (FI)**

(74) Representative: **Kolster Oy Ab**
**(Salmisaarenaukio 1)**
**P.O. Box 204**
**00181 Helsinki (FI)**

(56) References cited:
**EP-A1- 2 163 846      EP-A1- 2 163 846**
**WO-A2-03/094109      US-A1- 2002 191 198**

**US-A1- 2002 191 198      US-A1- 2012 202 515**

• **MOLINIER M ET AL: "Automatic tree stem delineation supporting forest inventory", GEOSCIENCE AND REMOTE SENSING SYMPOSIUM (IGARSS), 2011 IEEE INTERNATIONAL, IEEE, 24 July 2011 (2011-07-24), pages 4465-4468, XP032242343, DOI: 10.1109/IGARSS.2011.6129458 ISBN: 978-1-4577-1003-2**
• **Jari Varjo ET AL: "Working Papers of the Finnish Forest Research Institute Digital horizontal tree measurements for forest inventory", , 31 December 2006 (2006-12-31), pages 1-23, XP055327305, ISBN: 978-951-40-2026-1 Retrieved from the Internet: URL:http://www.mcit.stat.vtt.metla.eu/julk aisut/workingpapers/2006/mwp040.pdf [retrieved on 2016-12-08]**
• **MOLINIER ET AL.: 'Automatic tree stem delineation supporting forest inventory'.' GEOSCIENCE AND REMOTE SENSING SYMPOSIUM (IGARSS) - IEEE 24 July 2011, pages 4465 - 4468, XP032242343**

## Description

### Background of the Invention

This invention relates to a method for measuring of basal area of trunks in a forest. Said method is based on decoding photos taken of the forest cover, wherein the method comprises steps of:

- using a camera, whose horizontal view angle value is known and this value is kept constant when taking sample photos for measuring,
- taking sample photos by means of the camera of the forest cover in an area to be surveyed, wherein measuring data is included in each photo,
- storing photos in a database for analyzing.

### Cross reference to related publications

Earlier is known a measuring method of biomass in forest from the EP application no. 2163846 which discloses laser distance measuring, analysis of digital photographs, machine vision and GPS location data. The intellectual mobile phone contains camera, GPS and extra sensors that logs in a server and databases. In the measurement and login device the programs calculate the analysis data in the real time measurements.

US patent publication no. 7315794 discloses a timber survey system performing the steps of: placing a first reference point and a second reference point on a tree trunk, wherein an actual distance between the first reference point and the second reference point is a known distance, capturing an image of that portion of the tree trunk having the reference points placed on the trunk; measuring on the image an image distance, between the first reference point and the second reference point; measuring on the image an image distance, between the left outer boundary and the right outer boundary of the tree trunk; and calculating an actual distance, between the left outer boundary and the right outer boundary of the tree trunk.

The above referred methods have as disadvantages that at least part of the measurements must be done in a forest like reference measuring and distance measuring, further in the known methods unreliable machine vision is used, wherein especially said machine vision cannot reliable identify different tree species.

Moreover, MOLINIER M ET AL: "Automatic tree stem delineation supporting forest inventory", GEOSCIENCE AND REMOTE SENSING SYMPOSIUM (IGARSS), 2011 IEEE INTERNATIONAL, IEEE, 24 July 2011 (2011 -07-24), pages 4465-4468, XP032242343, DOI: 1 0.1109/IGARSS.2011.6129458, ISBN: 978-1-4577-1003-2 presents a study for developing an automatic procedure to detect tree stems in cell phone images. According to said study, if the stems can be detected, the central projection geometry of the images makes it possible to apply the so called relascope principle to predict the basal area of stems per hectare. The basal area is closely correlated with tree biomass. Images were acquired, in the study, in an area where detailed tree-wise information is available. The tree stem delineation methods were based on color and edge information to tackle the challenges of occlusions and varying illumination conditions. Geolocalized images can be used as in-situ reference data for remote sensing data analysis to provide wall-to-wall estimates.

### Summary of the Invention

By the method according to the invention an essential improvement can be achieved in surveying basal area and further in determining biomass or tree quantity of the forest based on said basal area per area unit.

In an aspect, there is provided the method of the independent claim. Embodiments are defined in the dependent claims.

The method according to the invention facilitates especially work in the forest when determining the basal area of the forest cover. The measuring person only takes several photographs when walking in the area being measured. The tree species do not need to be identified in the forest. The number of trees as well as trunk breadths do not need to be known because these will be later measured and determined from the sample photos.

### Brief Description of the Drawings

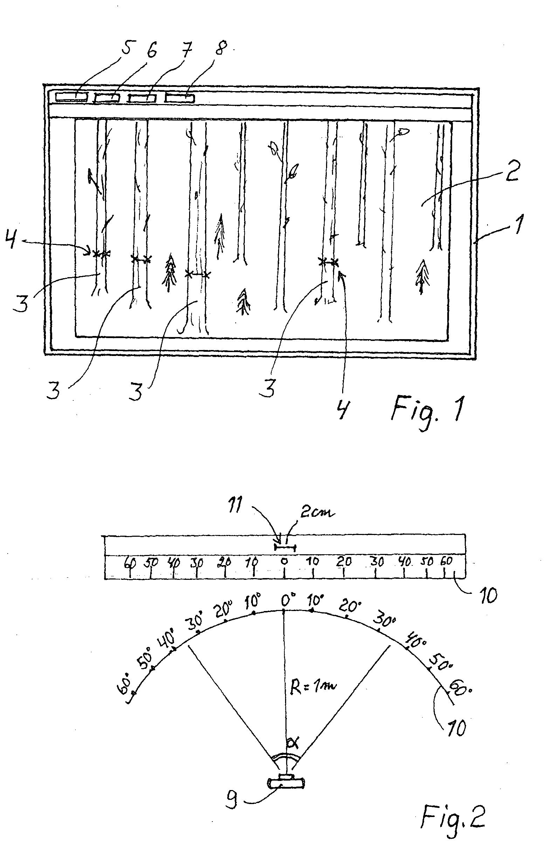

In the following the invention is described more detailed by referring to the accompanying drawings where: Figure 1 describes a digital photo of a forest for measuring of its basal area per area unit. Figure 2 describes a camera calibration arrangement.

Figure 1 is a sample photo taken by a digital camera 9 like mobile camera device. The horizontal view angle value $\alpha$ of the camera is known or said angle value must be measured.

If the horizontal view angle value $\alpha$ is not known it can be measured according to figure 2 by taking a calibration photo of a scaled flexible band 10 which locates at a distance R from the camera 9. Distance R is 1 m in this example. The band 10 has been bent towards the camera 9 in a circle shape also with radius R. The scaled band 10 has been equipped with an angle scale - 60° to + 60° and in addition a line segment 11, the length of which is in this case 2 cm. From the taken photo the horizontal angle value $\alpha$ of the camera 9 can be seen by reading it from the scale 10 in the photo. The visible portion of the band 10 indicates the angle value $\alpha$.

In the following it is from the calibration photo measured number of pixels included in said 2 cm line segment 11. This pixel number is changed to native resolution pixels in the following way:

$$\text{(A)}\;\; \text{Trunk breadth limit value in pixels} = \frac{\textit{measured number of pixels}}{\textit{native horizontal resolution}\;\;/\;\;\textit{horizontal resolution of photo}}$$

The user takes via mobile device like digital camera 9 or mobile camera sample photos 2 of the measured forest. The camera device 9 comprises client program which maintains view angle value $\alpha$ to be constant and sends photos 2 to a database of web server system. In this invention the analyzing of the photos 2 is carried out in crowdsourcing wherein some elected persons or group of persons can be received photos 2 via Internet for analyzing.

A person who is measuring number of trunks 3 from the sample photo 2 locating in the display 1 (fig. 1), moves cursor from one side of a trunk 3 to the other side and clicks by means of a mouse the start and end points of the trunk breadth. The figure 1 shows some trunks 3 which have measured by cursor, as seen marked with reference number 4. The person measures by this way using cursor at least all possible trunks 3 in the photo which may have needed breadth. The measuring height on the trunk 3 is preferable 1,3 m. The person may measure also a little narrower trunks because this does not cause any mistake when the program will reject all trunks 3 whose breadth does not have the needed number of pixels calculated according to the formula A above.

The analyzing person defines from the sample photos 2 existing tree species and stores simultaneously also the trunk 3 whose breadth is marked by the cursor. The analyzing person has in his display 1 function keys 5 - 8 by means of which she/he can elect functions like storing, sending data, electing tree species, making corrections.

In this invention the measuring person is carrying out photo decoding via internet when received sample photos 2 of the forest area whose basal area of trunks per area unit must be measured. When the analyzing person receives photos 2 she/he also receives operation system which is steering the analyzing. The analyzing person only observes and elects tree species of each trunk 3 whose breadth she/he is marking by a cursor on the display 1 which is presenting sample photo 2. The operation system comprises function to return photo analyzing from the analyzing person to the database of the measuring organization.

From each photo 2 a basal area value (m2) / hectare can be measured from the calculated and accepted number of the trunks 3 by means of the formula

$$\text{(B)}\;\; \text{Basal area (m2)} = \text{number of trunks}\; x \; Q \; x \; \frac{360°}{\alpha}$$

This formula B gives result per hectare when the camera 9 has been calibrated by the manner described above and the pixel number is calculated per line segment 11 whose length is 2 cm. By same principle the basal area can be calculated for example square yard per acre. Then must be different line segment length or radius R used. Q is relascope factor. This factor is 1 when R = 1 m and length of the used line segment 11 is 2 cm.

In one embodiment of the method a lot of landscape photos 2 are taken of the forest cover wherein average value is calculated of the numbers of the trunks 3 elected from each photos 2.

In another embodiment of the method the analyzing person elects from the sample photo 2 when surveyed it on the display 1 such a trunks 3 that can be accepted as sample trunks based on the breadth of said trunk 3 by utilizing on the display moved line segment the length of which points out if the trunk 3 could be accepted or not. Also can be used method to click with the cursor in both sides of the trunk, as can be seen from the figure 1 pointed with reference number 4.

In another embodiment the person makes in a web server a photo analysis of those photos 2 whose analysis done by machine vision has been rejected. Also the person stores a location data with each sample photo 2.

Further in the invented method the location data is utilized in determination of the basal area calculation by dividing measured area into smaller areas by means of the location data and calculating the basal area for of each of these areas separately According to the invention the sending of the sample photos 2 from the camera device to web server can be arranged to happen automatically. Also the real time information of basal area and tree species distribution can be sent to the camera device during the measuring session.

**Claims**

1. Method for measuring of a basal area of trunks in a forest, said method being based on decoding photos taken of a forest cover, wherein the method comprises steps of:

   - using a camera (9), whose horizontal view angle value, $\alpha$, is known and is kept constant when taking sample photos for measuring,
   - taking sample photos (2) by means of the camera (9) of the forest cover in an area to be surveyed, wherein measuring data is included in each sample photo (2),
   - storing the taken sample photos (2) of the forest cover into a database created in a web server,
   - calculating, in a web server, the number of trunks from the sample photos (2) taken of the forest cover, wherein such a trunk (3) whose breadth as pixels exceeds a limit value of pixels measured for the camera (9) is calculated to add to said number,
   - when the horizontal angle value, $\alpha$, of the camera (9) is smaller than 360°, multiplying the number of trunks (3) by a value $360°/\alpha$,
   - carrying out election of the trunks (3) for the calculating of the number of trunks and defining their tree species by a person or group of persons using a web browser connected to a cloud service, wherein, in the web server, a person enters via the web browser to look at the sample photos (2), identifies the tree species on the display (1), picks up trunks (3) for trunk calculation and stores the measurement, the trunks (3) that can be accepted as sample trunks being elected, from the sample photo (2) surveyed on a display (1), based on a measurement of a breadth of said trunk (3) utilizing a line segment moved on the display (1) or a movement of a cursor from one side of the trunk (3) to another, and
   - determining the basal area or basal areas per tree species of the forest cover in the surveyed forest area per area unit from the number of the trunks (3).

2. Method according to claim 1, wherein a person or group of persons working via web browser connected to a cloud service are connected to the database, from where sample photos (2) and computer software for performing the work can be obtained.

3. Method according to claim 1, wherein a lot of photos (2) are taken of the forest cover, wherein an average value is calculated of the numbers of the trunks (3) in each of the lot of photos (2).

4. Method according to claim 1, wherein sample photos (2) are taken as landscape photos for determining the basal area.

5. Method according to claim 1, wherein the web server comprises a computer software, which removes from the group of trunks elected by the person the trunks whose breadth does not fulfill the breadth requirement.

6. Method according to claim 1, wherein in the web server the person elects the tree species and stores the measuring utilizing function keys (5, 6, 7, 8).

7. Method according to claim 1, wherein in the web server the person makes a photo analysis of those photos (2) whose analysis done by machine vision has been rejected.

8. Method according to claim 1, wherein location data is stored with each sample photo (2).

9. Method according to claim 1, wherein location data is utilized in determination of the basal area calculation by dividing measured area into smaller areas by means of the location data.

10. Method according to claim 1, wherein sending of the sample photos (2) from the camera (9) to the web server is arranged to happen automatically.

11. Method according to claim 1, wherein real time information of basal area and tree species distribution is be sent to the camera (9) during the measuring session.

**Patentansprüche**

1. Verfahren zum Messen einer Grundfläche von Stämmen in einem Wald, wobei das Verfahren auf dem Decodieren von Fotos basiert, die von einer Bewaldung aufgenommen werden, wobei das Verfahren die folgenden Schritte umfasst:

   - Verwenden einer Kamera (9), deren horizontaler Sichtwinkelwert, a, bekannt ist und beim Aufnehmen von Probefotos zum Messen konstant gehalten wird,
   - Aufnehmen von Probefotos (2) mittels der Kamera (9) von der Bewaldung auf einer zu untersuchenden Fläche, wobei in jedem Probefoto (2) Messdaten beinhaltet sind,
   - Speichern der aufgenommenen Probefotos (2) der Bewaldung in einer auf einem Webserver erstellten Datenbank,
   - Berechnen der Anzahl von Stämmen aus den Probefotos (2), die von der Bewaldung aufgenommen werden, auf einem Webserver, wobei ein solcher Stamm (3), dessen Breite in Pixeln einen Grenzwert von Pixeln, der für die Kamera (9) gemessen wird, überschreitet, zum Hinzufügen zu der Anzahl berechnet wird,
   - wenn der horizontale Winkelwert, a, der Kamera (9) kleiner ist als 360°, Multiplizieren der Anzahl von Stämmen (3) mit einem Wert $360°/\alpha$,
   - Ausführen der Auswahl von Stämmen (3) zum Berechnen der Anzahl von Stämmen und Definieren von deren Baumarten durch eine Person oder eine Gruppe von Personen unter Verwendung eines Webbrowsers, der mit einem Clouddienst verbunden ist, wobei eine Person auf dem Webserver via den Webbrowser eintritt, um sich die Probefotos (2) anzusehen, die Baumarten auf der Anzeige (1) identifiziert, Stämme (3) zur Stammberechnung wählt und die Messung speichert, wobei die Stämme (3), die als Probestämme akzeptiert werden können, auf Basis einer Messung einer Breite des Stamms (3) unter Verwendung eines Liniensegments, das auf der Anzeige (1) bewegt wird, oder einer Bewegung eines Cursors von einer Seite des Stamms (3) zu einer anderen aus dem Probefoto (2), das auf einer Anzeige (1) untersucht wird, ausgewählt werden, und
   - Bestimmen der Grundfläche oder Grundflächen pro Baumart der Bewaldung auf der untersuchten Waldfläche pro Flächeneinheit aus der Anzahl von Stämmen (3).

2. Verfahren nach Anspruch 1, wobei eine Person oder eine Gruppe von Personen, die via Webbrowser arbeiten, der mit einem Clouddienst verbunden ist, mit der Datenbank verbunden sind, aus der Probefotos (2) und Computersoftware zum Durchführen der Arbeit erhalten werden können.

3. Verfahren nach Anspruch 1, wobei von der Bewaldung viele Fotos (2) aufgenommen werden, wobei auf jedem der vielen Fotos (2) ein Durchschnittswert der Anzahl von Stämmen (3) berechnet wird.

4. Verfahren nach Anspruch 1, wobei zum Bestimmen der Grundfläche Probefotos (2) als Landschaftsfotos aufgenommen werden.

5. Verfahren nach Anspruch 1, wobei der Webserver eine Computersoftware umfasst, die aus der Gruppe von Stämmen, die von der Person ausgewählt werden, die Stämme entfernt, deren Breite die Breitenanforderung nicht erfüllt.

6. Verfahren nach Anspruch 1, wobei die Person auf dem Webserver unter Verwendung von Funktionstasten (5, 6, 7, 8) die Baumarten auswählt und die Messung speichert.

7. Verfahren nach Anspruch 1, wobei die Person auf dem Webserver eine Fotoanalyse von den Fotos (2) vornimmt, deren Analyse, die durch industrielle Bildverarbeitung erfolgt ist, zurückgewiesen wurde.

8. Verfahren nach Anspruch 1, wobei mit jedem Probefoto (2) Standortdaten gespeichert werden.

9. Verfahren nach Anspruch 1, wobei Standortdaten bei der Bestimmung der Grundflächenberechnung durch Teilen der gemessenen Fläche in kleinere Flächen mittels der Standortdaten verwendet werden.

10. Verfahren nach Anspruch 1, wobei das Senden der Probefotos (2) von der Kamera (9) zum Webserver angeordnet ist, automatisch zu erfolgen.

11. Verfahren nach Anspruch 1, wobei Echtzeitinformationen von Grundfläche und Baumartverteilung während der Messsitzung an die Kamera (9) gesendet werden.

**EP 2 986 930 B1**

**Revendications**

1. Procédé de mesure d'une surface terrière de troncs dans une forêt, ledit procédé étant basé sur le décodage de photos prises d'un couvert forestier, dans lequel le procédé comprend les étapes consistant à :

   - utiliser un appareil de prise de vues (9), dont une valeur d'angle de vue horizontal, a, est connue et est maintenue constante lors de la prise de photos échantillons pour la mesure,
   - prendre des photos échantillons (2) au moyen de l'appareil de prise de vues (9) du couvert forestier dans une surface à étudier, dans lequel des données de mesure sont incluses dans chaque photo échantillon (2),
   - stocker les photos échantillons (2) prises du couvert forestier dans une base de données créée dans un serveur Web,
   - calculer, dans un serveur Web, le nombre de troncs à partir des photos échantillons (2) prises du couvert forestier, dans lequel un tronc (3) dont la largeur en pixels dépasse une valeur limite de pixels mesurés pour l'appareil de prise de vues (9) est calculé pour être ajouté audit nombre,
   - lorsque la valeur d'angle horizontal, a, de l'appareil de prise de vues (9) est inférieure à 360°, multiplier le nombre de troncs (3) par une valeur 360°/$\alpha$,
   - effectuer un choix des troncs (3) pour le calcul du nombre de troncs et définir leur espèce d'arbre par une personne ou un groupe de personnes utilisant un navigateur Web connecté à un service en nuage, dans lequel, dans le serveur Web, une personne entre via le navigateur Web pour regarder les photos échantillons (2), identifie les espèces d'arbre sur l'affichage (1), prélève des troncs (3) pour un calcul de tronc et stocke la mesure, les troncs (3) qui peuvent être acceptés comme troncs échantillons étant choisis à partir de la photo échantillon (2) étudiée sur un affichage (1) sur la base d'une mesure d'une largeur dudit tronc (3) en utilisant un segment de ligne se déplaçant sur l'affichage (1) ou un déplacement d'un curseur d'un côté du tronc (3) à l'autre, et
   - déterminer la surface terrière ou les surfaces terrières par espèce d'arbre du couvert forestier dans la surface forestière étudiée par unité de surface à partir du nombre des troncs (3).

2. Procédé selon la revendication 1, dans lequel une personne ou un groupe de personnes travaillant via un navigateur Web connecté à un service en nuage sont connectés à la base de données, à partir de laquelle des photos échantillons (2) et un logiciel informatique pour réaliser le travail peuvent être obtenus.

3. Procédé selon la revendication 1, dans lequel un lot de photos (2) est pris du couvert forestier, dans lequel une valeur moyenne des nombres des troncs (3) dans chaque photo du lot de photos (2) est calculée.

4. Procédé selon la revendication 1, dans lequel des photos échantillons (2) sont prises sous forme de photos de paysage pour déterminer la surface terrière.

5. Procédé selon la revendication 1, dans lequel le serveur Web comprend un logiciel informatique, qui retire du groupe de troncs choisis par la personne les troncs dont la largeur ne remplit pas l'exigence de largeur.

6. Procédé selon la revendication 1, dans lequel, dans le serveur Web, la personne choisit l'espèce d'arbre et stocke la mesure en utilisant les touches de fonction (5, 6, 7, 8).

7. Procédé selon la revendication 1, dans lequel, dans le serveur Web, la personne effectue une analyse photographique des photos (2) dont l'analyse effectuée par vision artificielle a été rejetée.

8. Procédé selon la revendication 1, dans lequel des données d'emplacement sont stockées avec chaque photo échantillon (2).

9. Procédé selon la revendication 1, dans lequel des données d'emplacement sont utilisées dans la détermination du calcul de surface terrière en divisant une surface mesurée en surfaces plus petites au moyen des données d'emplacement.

10. Procédé selon la revendication 1, dans lequel l'envoi des photos échantillons (2) à partir de l'appareil de prise de vues (9) au serveur Web est agencé pour se produire automatiquement.

11. Procédé selon la revendication 1, dans lequel des informations en temps réel d'une surface terrière et d'une répartition d'espèces d'arbre sont envoyées à l'appareil de prise de vues (9) pendant la session de mesure.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2163846 A

- US 7315794 B

**Non-patent literature cited in the description**

- Automatic tree stem delineation supporting forest inventory. **MOLINIER M et al.** GEOSCIENCE AND REMOTE SENSING SYMPOSIUM (IGARSS), 2011 IEEE INTERNATIONAL. IEEE, 24 July 2011, 4465-4468